# EUROPÄISCHE PATENTSCHRIFT

(11) **EP 2 913 175 B1**
(45) Veröffentlichungstag und Bekanntmachung des Hinweises auf die Patenterteilung: **20.04.2016**
(21) Anmeldenummer: 14157300.6
(22) Anmeldetag: 28.02.2014
(51) Int. Cl.: B29C 63/36

(54) **Verfahren zum Auskleiden einer Rohrleitung**
Method for lining a pipeline
Procédé de revêtement d'une canalisation

(43) Veröffentlichungstag der Anmeldung: 02.09.2015
(73) Patentinhaber: PHT Handel und Technik GmbH, 30966 Hemmingen (DE)
(72) Erfinder:
(74) Vertreter: Glawe, Delfs, Moll

(56) Entgegenhaltungen:
- EP-A1- 2 554 359
- EP-A1- 2 660 500

## Beschreibung

Die Erfindung betrifft ein Verfahren zum Auskleiden einer Rohrleitung mit einem dichtenden Innenschlauch sowie eine entsprechend ausgekleidete Rohrleitung.

Verfahren zum Auskleiden einer Rohrleitung mit einem dichtenden Innenschlauch zum Zwecke der Sanierung von Rohrleitungen sind aus dem Stand der Technik bekannt. So ist in der US-A-4,368,091 ein Verfahren offenbart, bei dem auf der Innenseite eines Auskleidungsschlauches flüssiges Harz aufgetragen ist und der Auskleidungsschlauch unter Verwendung von Druckluft derart umgestülpt wird, dass sich der Auskleidungsschlauch mit der Seite, auf der das Harz aufgetragen ist, der Länge nach vollflächig an die Innenwand der sanierungsbedürftigen Rohrleitung anlegt und dort angepresst wird. Sobald das Harz ausgehärtet ist, kann der Druck im Innern des Auskleidungsschlauchs abgelassen und die Verschlussenden des Auskleidungsschlauches entfernt werden. Es steht dann eine durch den Auskleidungsschlauch abgedichtete, sanierte Rohrleitung. Ein ähnliches Verfahren ist aus der EP2660500 A1 bekannt.

Entsprechende Verfahren sind auch als sog. Reliningverfahren bekannt.

Wird eine Hochdruckleitung saniert, so wird diese nach der eigentlichen Sanierung vor der Inbetriebnahme mit einem Prüfdruck in Höhe des 1,1-fachen Werts des maximalen Betriebsdrucks der Hochdruckleitung auf Dichtigkeit geprüft, wobei aus Praktikabilitätsgründen regelmäßig Luft als Prüfmedium verwendet wird.

Bei Hochdruckleitungen, die mithilfe eines Reliningverfahren gemäß dem Stand der Technik saniert wurden, konnten nach erfolgter Druckprüfung vor Inbetriebnahme regelmäßig blasenförmige Ablösungen des Auskleidungsschlauches von der Rohrinnenwand festgestellt werden. Entsprechende Ablösungen sind jedoch laut Regelwerken für die Auskleidung von Rohrleitungen grundsätzlich nicht zulässig. Die Reliningverfahren aus dem Stand der Technik sind daher für die Verwendung mit Hochdruckleitungen grundsätzlich nicht geeignet und es müssen andere, in der Regel kostenintensivere Sanierungsverfahren gewählt werden.

Der Erfindung liegt die Aufgabe zugrunde, den aus dem Stand der Technik bekannten Problemen abzuhelfen. Gelöst wird diese Aufgabe durch das Verfahren gemäß Anspruch 1 sowie durch das Erzeugnis nach Anspruch 9. Vorteilhafte Weiterbildungen sind Gegenstand der abhängigen Ansprüche.

Demnach betrifft die Erfindung ein Verfahren zum Auskleiden einer Rohrleitung mit einem dichtenden Innenschlauch, mit den Schritten:
a.Einfüllen eines ersten Klebstoffs in ein schlauchförmiges Auskleidungsgewebe;
b.Gleichmäßiges Verteilen des ersten Klebstoffs im schlauchförmigen Auskleidungsgewebe über dessen Länge, sodass das schlauchförmige Auskleidungsgewebe mit dem ersten Klebstoff getränkt wird;
c.Einfüllen eines zweiten Klebstoffs in das schlauchförmige Auskleidungsgewebe, wobei der zweite Klebstoff eine höhere Viskosität aufweist als der erste Klebstoff;
d.Gleichmäßiges Verteilen des zweiten Klebstoffs im schlauchförmigen Auskleidungsgewebe über dessen Länge;
e.Ringförmiges Befestigen des schlauchförmigen Auskleidungsgewebes an einem Umkehrflansch;
f.Ausüben eines Drucks auf das schlauchförmige Auskleidungsgewebe derart, dass das schlauchförmige Auskleidungsgewebe an einem Wendepunkt hinter dem Umkehrflansch umgestülpt wird und sich der Wendepunkt von dem Umkehrflansch weg durch die auszukleidende Rohrleitung bewegt, wobei der bereits umgestülpte Bereich des schlauchförmigen Auskleidungsgewebes an die Innenwand der auszukleidenden Rohrleitung gedrückt wird; und
g.Aushärten des ersten und des zweiten Klebstoffes unter Aufrechterhaltung des Drucks im schlauchförmigen Auskleidungsgewebe.

Weiter betrifft die Erfindung eine Rohrleitung, welche gemäß dem erfindungsgemäßen Verfahren mit einem dichtenden Innenschlauch ausgekleidet ist.

Es wird auch ein Verfahren zur Herstellung eines imprägnierten schlauchförmigen Auskleidungsgewebes zum Auskleiden einer Rohrleitung beschrieben, umfassend die Schritte:
a.Einfüllen eines ersten Klebstoffs in ein schlauchförmiges Auskleidungsgewebe;
b.Gleichmäßiges Verteilen des ersten Klebstoffs im schlauchförmigen Auskleidungsgewebe über dessen Länge, sodass das schlauchförmige Auskleidungsgewebe mit dem ersten Klebstoff getränkt wird;
c.Einfüllen eines zweiten Klebstoffs in das schlauchförmige Auskleidungsgewebe, wobei der zweite Klebstoff eine höhere Viskosität aufweist als der erste Klebstoff;
d.Gleichmäßiges Verteilen des zweiten Klebstoffs im schlauchförmigen Auskleidungsgewebe über dessen Länge;

Weiterhin wird ein imprägniertes schlauchförmiges Auskleidungsgewebe gemäß dem vorstehenden Herstellungsverfahren beschrieben.

Die Erfindung hat erkannt, dass die blasenförmigen Ablösungen nach Ablassen des Prüfdrucks durch kleine Hohlräume zwischen schlauchförmigem Auskleidungsgewebe und Rohrwand oder im schlauchförmigen Auskleidungsgewebe selbst verursacht werden. Im Stand der Technik wurde das schlauchförmige Auskleidungsgewebe mit einem einzigen Klebstoff versehen, der auf der Innenseite des Auskleidungsgewebes gleichmäßig verteilt wurde, bevor das Auskleidungsgewebe mithilfe von Druckluft umgestülpt wurde. Dieser Klebstoff muss dabei eine ausreichend hohe Viskosität aufweisen, damit er nach dem Umstülpen des schlauchförmigen Auskleidungsgewebes und seinem Erhärten nicht von den Seitenflanken des Auskleidungsgewebes herabfließt. Aufgrund dieser für das Einbringen des Auskleidungsgewebes in die Rohrleitung gemäß dem Stand der Technik erforderlichen hohen Viskosität kommt es - wenn überhaupt - nur zu einer unvollständigen Tränkung des Auskleidungsgewebes. Die unvollständige Tränkung führt wiederum zu Lufteinschlüssen, die sich unter Einwirkung des zum Umstülpen aufgewendeten Drucks sammeln und die unerwünschten Hohlräume bilden. Da das Auskleidungsgewebe oder zumindest Bestandteile davon für Luft regelmäßig zu einem gewissen Grad permeabel ist, baut sich in diesen Hohlräumen während der Druckprüfung häufig der gleiche Prüfdruck auf wie in der Rohrleitung selbst. Wird nun der Prüfdruck abgelassen, kommt es zu einer relativ schnellen Druckentspannung in der Rohrleitung. Der Druck in den kleinen Hohlräumen kann aber nur sehr langsam entweichen, so dass direkt nach dem Ablassen des Prüfdrucks ein starker Überdruck in den beschriebenen Hohlräumen besteht, der zu der unerwünschten blasenförmigen Ablösung des Auskleidungsgewebes nach der Druckprüfung führt.

Ausgehend von dieser Erkenntnis ist erfindungsgemäß vorgesehen, das Auskleidungsgewebe vor dem Einbringen in die Rohrleitung nicht mit einem einzelnen Klebstoff zu versehen, sondern vielmehr nacheinander zwei unterschiedliche Klebstoffe aufzubringen.

Der zuerst aufzubringende erste Klebstoff weist dabei eine niedrigere Viskosität als der anschließend aufzubringende zweite Klebstoff auf. Der erste Klebstoff kann dabei so gewählt sein, dass eine ausreichende Tränkung des Auskleidungsgewebes erreicht wird, sodass keine oder zumindest möglichst wenig Lufteinschlüsse im getränkten Auskleidungsgewebe verbleiben. "Tränken" bedeutet in diesem Zusammenhang, dass das Auskleidungsgewebe mit Klebstoff durchzogen wird und insbesondere die Zwischenräume zwischen den einzelnen Gewebefasern im Wesentlichen mit Klebstoff gefüllt werden können. Um in die genannten Zwischenräume zu gelangen, muss u. a. die Viskosität des ersten Klebstoffs ausreichend niedrig sein.

Der zweite Klebstoff weist gegenüber dem ersten Klebstoff eine höhere Viskosität auf. Ähnlich zum Stand der Technik kann die Viskosität des zweiten Klebstoffs dabei so gewählt werden, dass er nach dem Umstülpen des Auskleidungsgewebes und seinem Erhärten nicht von den Seitenflanken des Auskleidungsgewebes herabfließt.

Die angegebenen Unterschiede in der Viskosität des ersten und des zweiten Klebstoffs beziehen sich dabei grundsätzlich jeweils auf den Zeitpunkt des Einfüllens des jeweiligen Klebstoffs in das Auskleidungsgewebe. In anderen Worten ist die Viskosität des ersten Klebstoffs zum Zeitpunkt seines Einfüllens in das Auskleidungsgewebe also niedriger als die Viskosität des zweiten Klebstoffs zum Zeitpunkt dessen Einfüllens in das Auskleidungsgewebe. Sofern wenigstens einer der beiden Klebstoffe ein (partiell) thixotropes Verhalten aufweist, bezieht sich das erfindungsgemäße Verhältnis der Viskositäten jedoch auf den jeweiligen Zustand der Klebstoffe, in dem keine thixotrope Veränderungen der Viskosität vorliegt, bspw. nach ausreichender Relaxationszeit, in der eine thixotrope Veränderung der Viskosität eines Klebstoffs vollständig abgeklungen ist.

Es ist bevorzugt, wenn die Einfüllmenge des ersten Klebstoffs derart bemessen ist, dass das schlauchförmige Auskleidungsgewebe nach dem gleichmäßigen Verteilen des ersten Klebstoffs vollständig mit diesem getränkt bzw. durchtränkt ist. Dadurch kann sichergestellt werden, dass keine oder nur äußerst wenige Lufteinschlüsse im Gewebe vorhanden sind. Die Einfüllmenge kann weiterhin derart bemessen sein, dass nach dem Tränken des Auskleidungsgewebes kein oder nur wenig überschüssiger erster Klebstoff auf der Oberfläche des Auskleidungsgewebes vorhanden ist. Entsprechend überschüssiger erster Klebstoff kann nach dem gleichmäßigen Verteilen auch aus dem schlauchförmigen Auskleidungsgewebe entfernt werden.

Der Anteil der Menge des ersten Klebstoffs an der Gesamtmenge aus erstem und zweitem Klebstoff kann 20-50 Vol.-%, vorzugsweise 30-50 Vol.-%, weiter vorzugsweise 35-45 Vol.-% betragen.

Es ist bevorzugt, wenn der erste Klebstoff und der zweite Klebstoff sich lediglich in der Art oder in den Anteilen der Füllstoffe unterscheiden, um die gewünschten unterschiedlichen Viskositäten zu erreichen. Füllstoffe sind solche Stoffe, mit denen unterschiedliche Eigenschaften des Klebstoffs, wie Viskosität, Topfzeit, Geruch oder Farbe eingestellt werden können. Insbesondere kann es sich bei dem ersten Klebstoff um eine Modifikation des zweiten Klebstoffes handeln, bspw. aufgrund von zusätzlichen Füllstoffen bzw. Veränderung der Füllstoffanteile. In dem sich der erste und der zweite Klebstoff nur in den Füllstoffen unterscheiden, ist nach dem vollständigen erhärten beider Klebstoffe eine gute Verbindung der beiden Klebstoffschichten gewährleistet. Insbesondere können so unerwünschte Wechselwirkungen zwischen den beiden Klebstoffen, die sich nachteilig auf die letztendliche Anhaftung des Auskleidungsgewebes an der Rohrinnenwand auswirken können, vermieden werden.

Das schlauchförmige Auskleidungsgewebe kann vorzugsweise eine Kunststoffbeschichtung aufweisen, die im Ausgangszustand außen liegend und nach dem Umstülpen innen liegend ist. Die Kunststoffbeschichtung kann auf das später durch die Rohrleitung zu transportierende Fördermedium angepasst sein und das eigentliche Auskleidungsgewebe vor dem Fördermedium schützen.

Es ist besonders bevorzugt, wenn der erste und der zweite Klebstoff Epoxidharz mit unterschiedlichen Viskositäten sind. Es ist bevorzugt, wenn das schlauchförmige Auskleidungsgewebe aus Polyesterfasern ist.

Für das Aushärten des ersten und des zweiten Klebstoffes kann vorgesehen sein, heißen Dampf in das schlauchförmige Auskleidungsgewebe bzw. das Innere der Rohrleitung zuzuführen. Bei gleichzeitiger Aufrechterhaltung des Drucks im schlauchförmigen Auskleidungsgewebe kann so das Aushärten der Klebstoffe beschleunigt werden.

Die erfindungsgemäße Rohrleitung ist mit einem dichtenden Innenschlauch ausgekleidet, welche mithilfe des erfindungsgemäßen Verfahrens in die Rohrleitung eingebracht wurde. Zur Erläuterung der erfindungsgemäßen Rohrleitung wird daher auf die vorstehenden Ausführungen verwiesen. Bei der erfindungsgemäßen Rohrleitung lassen sich bei ordnungsgemäßer Durchführung des Verfahrens im Vergleich zu gemäß dem Stand der Technik ausgekleideten Rohrleitungen keine oder nur sehr wenige Lufteinschlüsse in der Auskleidung feststellen.

Für Erläuterungen des Verfahrens zur Herstellung eines schlauchförmigen Auskleidungsgewebes zum Auskleiden einer Rohrleitung wird ebenfalls auf die obenstehenden Ausführungen verwiesen. Die vorteilhaften Weiterbildungen des dort beschriebenen Verfahrens, die sich auf die Klebstoffe und die Ausgestaltung des Auskleidungsgewebes beziehen, gelten analog auch für das Herstellungsverfahren.

Das nach diesem Herstellungsverfahren erreichte imprägnierte schlauchförmige Auskleidungsgewebe unterscheidet sich von imprägnierten Auskleidungsschläuchen gemäß dem Stand der Technik darin, dass im Auskleidungsgewebe und der Klebstoffschicht keine oder nur wenige Lufteinschlüsse vorhanden sind.

Die Erfindung wird nun anhand einer bevorzugten Ausführungsform unter Bezugnahme auf die beigefügten Zeichnungen beispielhaft beschrieben. Es zeigen:
- Figur 1a-e:: eine Anlage zur Durchführung des erfindungsgemäßen Verfahrens zum Auskleiden einer Rohrleitung mit einem dichtenden Innenschlauch in verschiedenen Verfahrensstadien;
- Figur 2:: ein Ablaufdiagramm des erfindungsgemäßen Verfahrens zum Auskleiden einer Rohrleitung mit einem dichtenden Innenschlauch; und
- Figur 3:: ein Teilschnitt durch die Rohrleitung aus Figuren 1d-e.

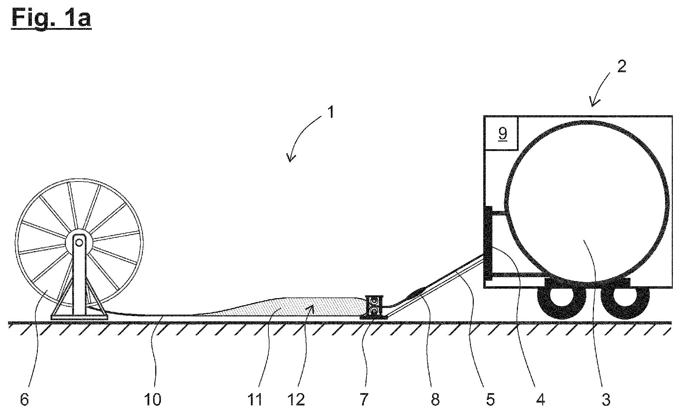

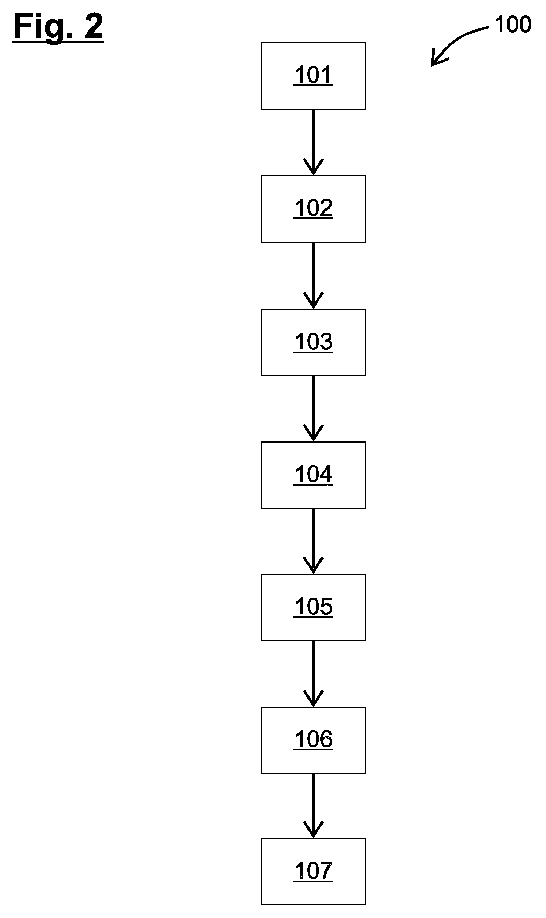

In Figuren 1a-e ist eine Anlage 1 zur Durchführung des erfindungsgemäßen Verfahrens dargestellt. Dabei zeigen die Figuren 1a-e die Anlage 1 in verschiedenen Stadien des erfindungsgemäßen Verfahrens. Der Ablauf des Verfahrens ist in Figur 2 dargestellt.

Die Anlage 1 umfasst eine mobile Reversierungsvorrichtung 2 mit einer drehbaren Reversierungstrommel 3 und einem ringförmigen Umkehrflansch 4. Die Reversierungstrommel 3 ist abgesehen von einer durch den Umkehrflansch 4 begrenzten Öffnung druckdicht ausgestaltet. Durch den Kompressor 9 kann der Reversierungstrommel 3 Druckluft zugeführt werden. Mit der Reversierungstrommel 3 fest und aufrollbar verbunden ist ein Rückhaltegurt 5, der in dem in Figur 1a dargestellten Verfahrensschritt durch die Öffnung des Umkehrflansches 4 geführt ist.

Die Anlage 1 umfasst weiterhin eine Gewebeschlauchtrommel 6, auf die ein schlauchförmiges Auskleidungsgewebe 10 aufgerollt ist. Das schlauchförmige Auskleidungsgewebe 10 ist dabei derart auf die Gewebeschlauchtrommel 6 aufgerollt, dass die später an der Innenwand der auszukleidenden Rohrleitung anliegende Seite innen liegend ist. Auch umfasst die Anlage 1 eine Mangelvorrichtung 7 mit zwei, im Hinblick auf den Abstand zwischen ihnen einstellbare Mangelrollen.

In einem ersten, in Figuren 1a-e nicht dargestellten Verfahrensschritt 101, wird das freie erste Ende des schlauchförmigen Auskleidungsgewebes 10 von der Gewebeschlauchtrommel 6 gezogen. In die Öffnung am ersten Ende des schlauchförmigen Auskleidungsgewebes 10 wird ein erster Klebstoff 11 eingefüllt, bevor das erste Ende durch die Mangelvorrichtung 7 geführt und an dem Rückhaltegurt 5 über einen Knoten 8 fest angebunden wird. Das Ergebnis dieses Verfahrensschritts 101 ist in Figur 1a dargestellt.

Indem zunächst der erste Klebstoff 11 in das schlauchförmige Auskleidungsgewebe 10 eingebracht wird, bevor das Auskleidungsgewebe 10 durch die Mangelvorrichtung 7 geführt wird, entsteht eine Klebstoffblase 12, die beim Aufwickeln des Auskleidungsgewebes 10 auf die Reversierungstrommel 3 zum zweiten Ende des Auskleidungsgewebes 10 hinbewegt wird. Während das Auskleidungsgewebe 10 auf die Reversierungstrommel 3 aufgewickelt wird, wird der erste Klebstoff 11 gleichmäßig im schlauchförmigen Auskleidungsgewebe 10 über dessen Länge verteilt und durch die Mangelrolle 7 in das Auskleidungsgewebe 10 eingemangelt (Verfahrensschritt 102). Der Abstand der Mangelrollen der Mangelvorrichtung 7 ist dabei so eingestellt, dass nach dem Durchziehen des Auskleidungsgewebes 10 kein erster Klebstoff 11 auf der Oberfläche des Auskleidungsgewebes 10 verbleibt, sondern lediglich in das Auskleidungsgewebe 10 eingedrungener erster Klebstoff 11 die Mangelvorrichtung 7 passiert.

Der erste Klebstoff 11 weist eine derartige Viskosität auf, dass er gut in das Gewebe des schlauchförmigen Auskleidungsgewebes 10 eindringt und dieses derart tränkt, dass keine oder nur sehr wenig Lufteinschlüsse im Auskleidungsgewebe 10 vorhanden sind. Im dargestellten Beispiel weist der erste Klebstoff 11 eine dynamische Viskosität von ca. 5 Pa·s bei 23°C bzw. 4-6 Pa·s bei 23°C auf.

Die Menge des ersten Klebstoffs 11 kann vor dem Einfüllen in das schlauchförmige Auskleidungsgewebe 10 so bemessen sein, dass das Auskleidungsgewebe 10 vollständig mit dem ersten Klebstoff 11 getränkt wird, ohne dass überschüssiger Klebstoff auf der Oberfläche des Auskleidungsgewebes 10 verbleibt. Gegebenenfalls überschüssiger erster Klebstoff 1 kann nach dem vollständigen Abrollen des schlauchförmigen Auskleidungsgewebes 10 von der Gewebeschlauchtrommel 6 durch die Öffnung am zweiten Ende des schlauchförmigen Auskleidungsgewebes 10 austreten.

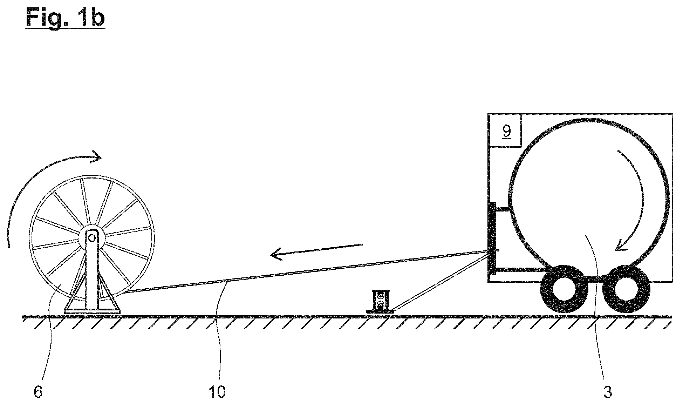

Ist das schlauchförmige Auskleidungsgewebe 10 praktisch vollständig auf die Reversierungstrommel 3 aufgewickelt, wird das zweite Ende des schlauchförmigen Auskleidungsgewebes 10, nachdem es die Mangelvorrichtung 7 passiert hat, wieder mit der Gewebeschlauchtrommel 6 verbunden. Das schlauchförmige Auskleidungsgewebe 10 wird dann von der Reversierungstrommel 3 ab- und auf die Gewebeschlauchtrommel 6 aufgewickelt. Entsprechendes ist in Figur 1b dargestellt.

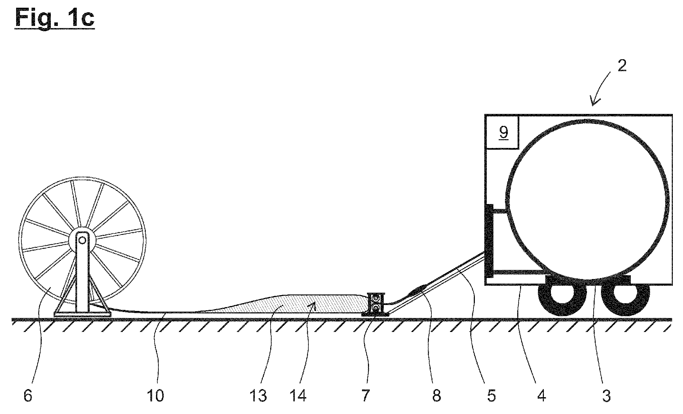

Ist das schlauchförmige Auskleidungsgewebe 10 vollständig von der Reversierungstrommel abgewickelt, wird der Knoten 8, mit dem das schlauchförmige Auskleidungsgewebe 10 an dem Rückhaltegurt 5 angebunden ist, gelöst und es wird an dem nun wieder freigewordenen ersten Ende des Auskleidungsgewebes 10 eine vorbestimmte Menge an zweitem Klebstoff 13 eingefüllt. Anschließend wird das erste Ende des Auskleidungsgewebes 10 durch die Mangelvorrichtung 7 geführt und mit einem Knoten 8 erneut an dem Rückhaltegurt 5 angebunden. Das Ende dieses Verfahrensschrittes 103 ist in Figur 1c dargestellt.

Indem der zweite Klebstoff 13 in das schlauchförmige Auskleidungsgewebe 10 eingebracht wird, bevor das Auskleidungsgewebe 10 durch die Mangelvorrichtung 7 geführt wird, entsteht eine Klebstoffblase 14, die beim Aufwickeln des Auskleidungsgewebes 10 auf die Reversierungstrommel 3 zum zweiten Ende des Auskleidungsgewebes 10 hinbewegt wird. Während das Auskleidungsgewebe 10 auf die Reversierungstrommel 3 aufgewickelt wird, wird der zweite Klebstoff 13 gleichmäßig im schlauchförmigen Auskleidungsgewebe 10 über dessen Länge verteilt (Verfahrensschritt 104). Der Abstand der Mangelrollen der Mangelvorrichtung 7 ist dabei so eingestellt, dass nach dem Durchziehen des Auskleidungsgewebes 10 eine in ihrer Dicke definierte Schicht an zweitem Klebstoff 13 zwischen den Lagen des Auskleidungsgewebes 10 verbleibt. Hat bspw. das Auskleidungsgewebe eine Dicke von etwa 2,5 mm, kann der Abstand der Mangelrollen auf 7 mm eingestellt werden, sodass eine ca. 2 mm dicke Schicht an zweitem Klebstoff 13 zwischen den beiden Lagen des Auskleidungsgewebes 10 verbleibt. Die Klebstoffschicht auf der Außenseite des Auskleidungsgewebes 10 nach dem Umstülpen beträgt dann ca. 1 mm.

Der zweite Klebstoff 13 weist eine höhere Viskosität als der erste Klebstoff 11 auf, die ausreichend ist, damit der zweite Klebstoff 13 nach dem im Folgenden beschriebenen Umstülpen des schlauchförmigen Auskleidungsgewebes 10 und während des Erhärtens nicht von den Seitenflanken des Auskleidungsgewebes 10 herabfließt.

Die Menge des zweiten Klebstoffs 13 sollte beim Einfüllen in das schlauchförmige Auskleidungsgewebe 10 für das gleichmäßige Verteilen des zweiten Klebstoffs 13 über die gesamte Länge des Auskleidungsgewebes 10 ausreichend bemessen sein. Gegebenenfalls überschüssiger zweiter Klebstoff 13 kann nach dem vollständigen Abrollen des schlauchförmigen Auskleidungsgewebes 10 von der Gewebeschlauchtrommel 6 durch die Öffnung am zweiten Ende des schlauchförmigen Auskleidungsgewebes 10 austreten.

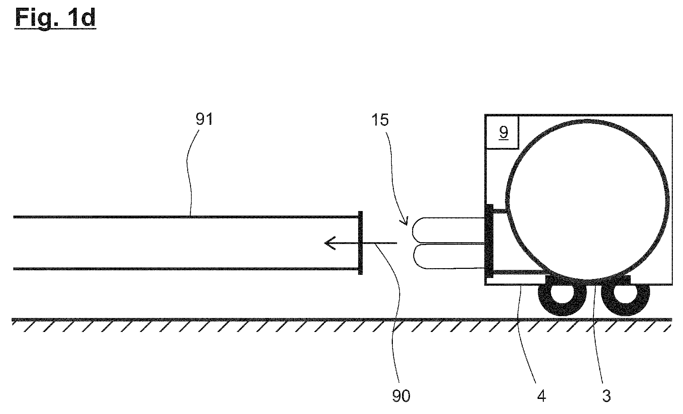

Ist das schlauchförmige Auskleidungsgewebe 10 vollständig durch die Mangelvorrichtung 7 gezogen, kann das zweite Ende des Auskleidungsgewebes 10 an dem ringförmigen Umkehrflansch 4 befestigt werden, wobei das Auskleidungsgewebe 10 luftdicht über den gesamten Umfang des Umkehrflansches 4 mit diesem verbunden ist (Verfahrensschritt 105). Wird nunmehr durch den Kompressor 9 der Druck in der Reversierungstrommel 3 erhöht, stülpt sich das schlauchförmige Auskleidungsgewebe 10 an einem Wendepunkt 15, der von der Reversierungstrommel 3 aus gesehen hinter dem Umkehrflansch 4 liegt, derart um, dass die mit Klebstoff versehene Seite des Auskleidungsgewebes 10 nach außen weist. Entsprechendes ist in Figur 1d dargestellt, wobei das Auskleidungsgewebe 10 als Schnitt dargestellt ist.

Unter Aufrechterhaltung des Drucks in der Reversierungstrommel 3 bzw. im bereits umgestülpten Bereich des schlauchförmigen Auskleidungsgewebes 10 kann der Wendepunkt 15 durch Abrollen des Auskleidungsgewebes 10 von der Reversierungstrommel 3 in die mit Pfeil 90 angedeutete Richtung bewegt und so in einer Rohrleitung 91 eingefahren werden. Durch den Druck im bereits umgestülpten Bereich des schlauchförmigen Auskleidungsgewebes 10 wird das Auskleidungsgewebe 10 an die Innenwand der Rohrleitung 91 gepresst (Verfahrensschritt 106).

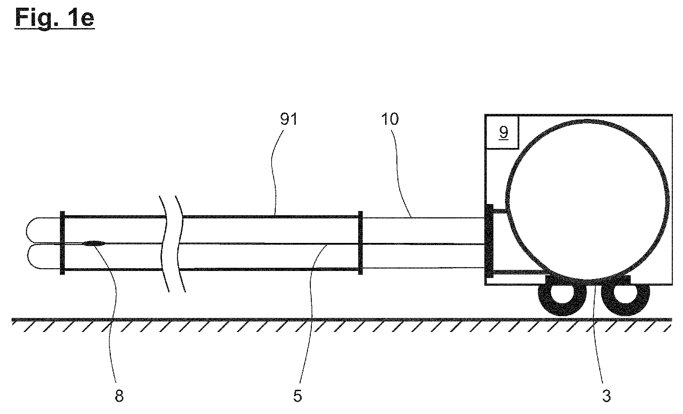

In Figur 1e ist die Situation dargestellt, nachdem das schlauchförmige Auskleidungsgewebe 10 vollständig in die Rohrleitung 91 eingefahren wurde. Der Auskleidungsgewebe 10 ist dabei praktisch vollständig umgestülpt. Das von der Reversierungstrommel 3 entfernte Ende des schlauchförmigen Auskleidungsgewebes 10 wird durch den Knoten 8, mit dem das Auskleidungsgewebe 10 an dem Rückhaltegurt 5 angebunden ist, druckdicht gehalten. Der Druck im Inneren des schlauchförmigen Auskleidungsgewebes 10 wird solange durch den Kompressor 9 aufrechterhalten, bis der erste und der zweite Klebstoff 11, 13 an der Außenseite des Auskleidungsgewebes 10 bzw. zwischen Auskleidungsgewebe 10 und Innenwand des Rohres 91 vollständig ausgehärtet sind (Verfahrensschritt 107). Um das Aushärten der Klebstoffe 11 und 13 zu beschleunigen, kann auch Dampf in das schlauchförmige Auskleidungsgewebe 10 eingebracht werden.

Sind die Klebstoffe 11, 13 vollständig ausgehärtet, kann das schlauchförmige Auskleidungsgewebe 10 bündig mit den Enden der Rohrleitung 91 abgetrennt und der Rückhaltegurt 5 auf die Reversierungstrommel 3 aufgerollt werden. Nach diesem Abschluss des Verfahrens ist die Rohrleitung 91 mit einem dichtenden Innenschlauch aus dem schlauchförmigen Auskleidungsgewebe 10 versehen.

Bei dem schlauchförmigen Auskleidungsgewebe 10 gemäß den Figuren 1a-e handelt es sich um ein Gewebe aus Polyesterfaser, welches auf einer Seite eine Kunststoffbeschichtung 16 aufweist. Die Kunststoffbeschichtung ist dabei auf der Seite des Auskleidungsgewebes 10 angeordnet, die vor dem umstülpen (vgl. Figuren 1a-c) außen liegend und nachdem umstülpen innen liegend ist. Bei dem ersten Klebstoff 11 und dem zweiten Klebstoff 13 im dargestellten Ausführungsbeispiel handelt es sich jeweils um Epoxidharz, wobei die Viskosität des ersten Klebstoffs 11 durch die Verwendung zusätzlicher Füllstoffe bzw. geänderter Füllstoffanteile gegenüber der Viskosität des zweiten Klebstoffs 13 herabgesetzt ist.

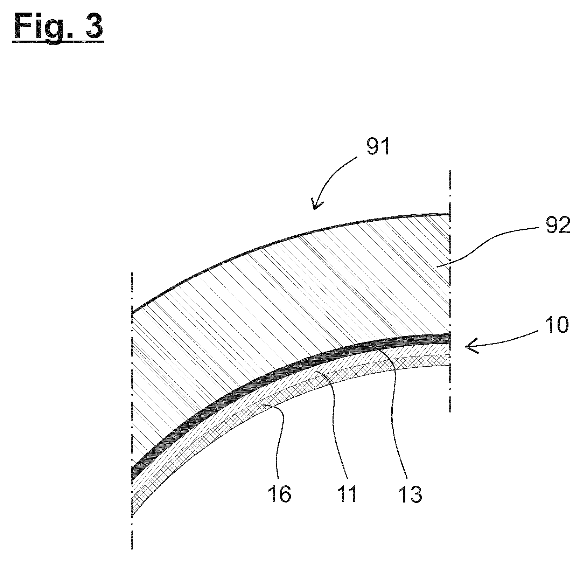

In Figur 3 ist ein Teilschnitt durch die Rohrleitung 91 aus Figuren 1d-e dargestellt, nachdem das schlauchförmige Auskleidungsgewebe 10 in die Rohrleitung 91 eingebracht wurde. Zwischen der Wand 92 der Rohrleitung 91 und dem schlauchförmigen Auskleidungsgewebe 10 ist eine Schicht aus zweitem Klebstoff 13 zu erkennen. Das Auskleidungsgewebe 10 selbst umfasst neben einem mit erstem Klebstoff 11 getränkten Gewebe aus Polyesterfasern die Kunststoffbeschichtung 16. Die Seite des Auskleidungsgewebes 10 mit der Kunststoffbeschichtung 16 ist dabei dem Rohrinneren zugewandt. Indem das Auskleidungsgewebe 10 mit erstem Klebstoff 11 getränkt ist, entstehen im Bereich des Auskleidungsgewebes 10 keine oder zumindest nur sehr wenige Lufteinschlüsse bzw. Hohlräume. Auch in der Schicht aus zweitem Klebstoff 13 sind bei ordnungsgemäßer Durchführung des erfindungsgemäßen Verfahrens keine oder nur sehr wenige Lufteinschlüsse vorhanden. Durch den, im Innern des schlauchförmigen Auskleidungsgewebes 10 herrschenden Druck wird das schlauchförmige Auskleidungsgewebe 10 an die Wand 92 der Rohrleitung 91 gepresst. Der Druck wird dabei so lange aufrechterhalten, bis die Klebstoffe 11, 13 vollständig ausgehärtet sind.

Ein Verfahren zur Herstellung eines imprägnierten schlauchförmigen Auskleidungsgewebes zum Auskleiden einer Rohrleitung entspricht den Verfahrensschritten 101 bis 104 des in Figur 2 dargestellten und oben erläuterten Verfahrens 100 zum Auskleiden einer Rohrleitung mit einem dichtenden Innenschlauch. Es wird daher auf die obenstehenden Ausführungen verwiesen. Gleiches gilt für das nach diesem Verfahren zur Herstellung eines imprägnierten schlauchförmigen Auskleidungsgewebes zum Auskleiden einer Rohrleitung hergestellte Auskleidungsgewebe.

## Patentansprüche

1. Verfahren zum Auskleiden einer Rohrleitung (91) mit einem dichtenden Innenschlauch, mit den Schritten:
a. Einfüllen eines ersten Klebstoffs (11) in ein schlauchförmiges Auskleidungsgewebe (10) (Schritt 101);
b. Gleichmäßiges Verteilen des ersten Klebstoffs (11) im schlauchförmigen Auskleidungsgewebe (10) über dessen Länge, sodass das schlauchförmige Auskleidungsgewebe (10) mit dem ersten Klebstoff (11) getränkt wird (Schritt 102);
c. Einfüllen eines zweiten Klebstoffs (13) in das schlauchförmige Auskleidungsgewebe (10), wobei der zweite Klebstoff (13) eine höhere Viskosität aufweist als der erste Klebstoff (11) (Schritt 103);
d. Gleichmäßiges Verteilen des zweiten Klebstoffs (13) in dem schlauchförmigen Auskleidungsgewebe (10) über dessen Länge (Schritt 104);
e. Ringförmiges Befestigen des schlauchförmigen Auskleidungsgewebes (10) an einem Umkehrflansch (4) (Schritt 105);
f. Ausüben eines Drucks auf das schlauchförmige Auskleidungsgewebe (10) derart, dass das schlauchförmige Auskleidungsgewebe (10) an einem Wendepunkt (15) hinter dem Umkehrflansch (4) umgestülpt wird und sich der Wendepunkt (15) von dem Umkehrflansch (4) weg durch die auszukleidende Rohrleitung (91) bewegt, wobei der bereits umgestülpte Bereich des schlauchförmigen Auskleidungsgewebes (10) an die Innenwand der auszukleidenden Rohrleitung (91) gedrückt wird (Schritt 106); und
g. Aushärten des ersten und des zweiten Klebstoffes (11, 13) unter Aufrechterhaltung des Drucks im schlauchförmigen Auskleidungsgewebe (10) (Schritt 107).

2. Verfahren nach Anspruch 1,
**dadurch gekennzeichnet, dass**
die Einfüllmenge des ersten Klebstoffs derart bemessen wird, dass das schlauchförmige Auskleidungsgewebe (10) nach dem gleichmäßigen Verteilen des ersten Klebstoffs (11) vollständig durchtränkt ist.

3. Verfahren nach einem der vorhergehenden Ansprüche,
**dadurch gekennzeichnet, dass**
der Anteil der Menge des ersten Klebstoffs (11) an der Gesamtmenge aus erstem und zweitem Klebstoff (11, 13) 20-50 Vol.-%, vorzugsweise 30-50 Vol.-%, weiter vorzugsweise 35-45 Vol.-% ist.

4. Verfahren nach einem der vorhergehenden Ansprüche,
**dadurch gekennzeichnet, dass**
der erste Klebstoff (11) und der zweite Klebstoff (13) sich in der Art oder in den Anteilen der Füllstoffe unterscheiden.

5. Verfahren nach einem der vorhergehenden Ansprüche,
**dadurch gekennzeichnet, dass**
das schlauchförmige Auskleidungsgewebe (10) eine Kunststoffbeschichtung (16) aufweist, die im Ausgangszustand außen liegend und nach dem Umstülpen innen liegend ist.

6. Verfahren nach einem der vorhergehenden Ansprüche,
**dadurch gekennzeichnet, dass**
der erste und der zweite Klebstoff (11, 13) Epoxidharz mit unterschiedlichen Viskositäten sind.

7. Verfahren nach einem der vorhergehenden Ansprüche,
**dadurch gekennzeichnet, dass**
das schlauchförmige Auskleidungsgewebe (10) aus Polyesterfasern ist.

8. Verfahren nach einem der vorhergehenden Ansprüche,
**dadurch gekennzeichnet, dass**
zum Aushärten des ersten und des zweiten Klebstoffes (11, 13) heißer Dampf in das schlauchförmige Auskleidungsgewebe (10) zugeführt wird.

9. Rohrleitung (91), die mit einem dichtenden Innenschlauch ausgekleidet ist, hergestellt nach einem Verfahren gemäß einem der Ansprüche 1 bis 8.

## Claims

1. Method for lining a pipeline (91) with a sealing inner tube, comprising the steps of:
a. filling a tubular lining fabric (10) with a first adhesive (11) (step 101);
b. evenly distributing the first adhesive (11) in and over the length of the tubular lining fabric (10) such that the tubular lining fabric (10) is impregnated with the first adhesive (11) (step 102);
c. filling the tubular lining fabric (10) with a second adhesive (13), wherein the second adhesive (13) is more viscous than the first adhesive (11) (step 103);
d. evenly distributing the second adhesive (13) in and over the length of the tubular lining fabric (10) (step 104);
e. attaching the tubular lining fabric (10) to a reversing flange (4) in an annular manner (step 105) ;
f. exerting a pressure on the tubular lining fabric (10) such that the tubular lining fabric (10) is turned inside out at a turning point (15) behind the reversing flange (4) and the turning point (15) moves through the pipeline (91) to be lined, away from the reversing flange (4), wherein the region of the tubular lining fabric (10) which has already been turned inside out is pressed against the inner wall of the pipeline (91) to be lined (step 106); and
g. curing the first and the second adhesive (11, 13) while maintaining the pressure in the tubular lining fabric (10) (step 107).

2. Method according to claim 1, **characterised in that** the fill amount of first adhesive is such that the tubular lining fabric (10) is fully impregnated once the first adhesive (11) has been evenly distributed.

3. Method according to either of the preceding claims, **characterised in that** the percentage of the amount of first adhesive (11) of the overall amount of first and second adhesive (11, 13) is from 20 to 50 vol.%, preferably from 30 to 50 vol.%, more preferably from 35 to 45 vol.%.

4. Method according to any of the preceding claims, **characterised in that** the first adhesive (11) and the second adhesive (13) differ by the type or the proportions of the filling materials.

5. Method according to any of the preceding claims, **characterised in that** the tubular lining fabric (10) comprises a plastics coating (16) which is on the outside in the initial state and is on the inside after the lining fabric has been turned inside out.

6. Method according to any of the preceding claims, **characterised in that** the first and the second adhesive (11, 13) are epoxy resins having different viscosities.

7. Method according to any of the preceding claims, **characterised in that** the tubular lining fabric (10) is made of polyester fibres.

8. Method according to any of the preceding claims, **characterised in that** hot steam is fed into the tubular lining fabric (10) in order to cure the first and the second adhesive (11, 13).

9. Pipeline (91) which is lined with a sealing inner tube, produced in accordance with a method according to any of claims 1 to 8.

## Revendications

1. Procédé pour garnir une conduite tubulaire (91) avec un tuyau intérieur d'étanchéité, comprenant les étapes suivantes :
a. remplissage d'une première colle (11) dans un tissu de garnissage (10) en forme de tuyau (étape 101) ;
b. répartition uniforme de la première colle (11) dans le tissu de garnissage (10) en forme de tuyau sur sa longueur de telle sorte que le tissu de garnissage (10) en forme de tuyau est imbibé avec la première colle (11) (étape 102) ;
c. remplissage d'une deuxième colle (13) dans le tissu de garnissage (10) en forme de tuyau, la deuxième colle (13) présentant une viscosité plus élevée que la première colle (11) (étape 103) ;
d. répartition uniforme de la deuxième colle (13) dans le tissu de garnissage (10) en forme de tuyau sur sa longueur (étape 104) ;
e. fixation de forme annulaire du tissu de garnissage (10) en forme de tuyau sur une bride d'inversion (4) (étape 105) ;
f. exercice d'une pression sur le tissu de garnissage (10) en forme de tuyau de telle sorte que le tissu de garnissage (10) en forme de tuyau est retroussé au niveau d'un tournant (15) derrière la bride d'inversion (4) et de telle sorte que le tournant (15) se déplace à travers la conduite tubulaire (91) à garnir en s'éloignant de la bride d'inversion (4), la zone déjà retroussée du tissu de garnissage (10) en forme de tuyau étant pressée sur la paroi intérieure de la conduite tubulaire (91) à garnir (étape 106) ; et
g. durcissement de la première et de la deuxième colle (11, 13) avec maintien de la pression dans le tissu de garnissage (10) en forme de tuyau (étape 107).

2. Procédé selon la revendication 1,
**caractérisé en ce que**
la quantité de remplissage de la première colle est dimensionnée de telle sorte que le tissu de garnissage (10) en forme de tuyau est complètement imprégné après la répartition uniforme de la première colle (11).

3. Procédé selon l'une des revendications précédentes,
**caractérisé en ce que**
la fraction de la quantité de la première colle (11) par rapport à la quantité totale de la première et de la deuxième colle (11, 13) est comprise entre 20 et 50 %-vol., de préférence entre 30 et 50 %-vol., de façon également préférée entre 35 et 45 %-vol.

4. Procédé selon l'une des revendications précédentes,
**caractérisé en ce que**
la première colle (11) et la deuxième colle (13) diffèrent par la nature ou par les fractions des charges.

5. Procédé selon l'une des revendications précédentes,
**caractérisé en ce que**
le tissu de garnissage (10) en forme de tuyau présente un revêtement en matière plastique (16) qui est situé à l'extérieur dans l'état initial et situé à l'intérieur après le retroussement.

6. Procédé selon l'une des revendications précédentes,
**caractérisé en ce que**
la première et la deuxième colle (11, 13) sont de la résine époxyde avec différentes viscosités.

7. Procédé selon l'une des revendications précédentes,
**caractérisé en ce que**
le tissu de garnissage (10) en forme de tuyau est en fibres de polyester.

8. Procédé selon l'une des revendications précédentes,
**caractérisé en ce que**,
pour le durcissement de la première et de la deuxième colle (11, 13), de la vapeur très chaude est acheminée dans le tissu de garnissage (10) en forme de tuyau.

9. Conduite tubulaire (91), qui est garnie d'un tuyau intérieur d'étanchéité, fabriquée selon un procédé selon une des revendications 1 à 8.
